# EUROPÄISCHE PATENTSCHRIFT

(11) **EP 1 148 977 B1**
(45) Veröffentlichungstag und Bekanntmachung des Hinweises auf die Patenterteilung: **15.01.2003**
(21) Anmeldenummer: 00909134.9
(22) Anmeldetag: 02.02.2000
(51) Int. Cl.: B25B 1/00

(54) **KABEL-SPARSCHALTUNG**
ECONOMY CONNECTION FOR A CABLE
CIRCUIT ECONOMISEUR DE CABLES

(30) Priorität: 05.02.1999 DE 19904776
(43) Veröffentlichungstag der Anmeldung: 31.10.2001
(73) Patentinhaber: Wilhelm, Raimund, 73457 Essingen (DE)
(72) Erfinder: Wilhelm, Raimund, 73457 Essingen (DE)
(74) Vertreter: Müller-Boré & Partner Patentanwälte
(86) Internationale Anmeldenummer: EP0000819
(87) Internationale Veröffentlichungsnummer: WO00045995

(56) Entgegenhaltungen:
- DE-A- 3 744 733
- DE-A- 3 922 049
- PATENT ABSTRACTS OF JAPAN vol. 012, no. 456 (P-793), 30. November 1988 (1988-11-30) & JP 63 178332 A (FUJITSU LTD;OTHERS: 01), 22. Juli 1988 (1988-07-22)
- HAGENBUCHER A ET AL: "Multiplexer" 1969 , VERLAG MODERNE INDUSTRIE WOLFGANG DUMMER & CO; LEXIKON DER DATENVERARBEITUNG , MÜNCHEN, DE XP002901055 4. Auflage Seite 379

## Beschreibung

Die Erfindung betrifft eine Vorrichtung, gemäß dem Oberbegriff des Anspruchs 1 (siehe, z.B., DE 3 922 049 A1), und ein Verfahren zum Übertragen kodierter Daten zwischen einem Schraubgerät und einer zugeordneten Zentraleinheit.

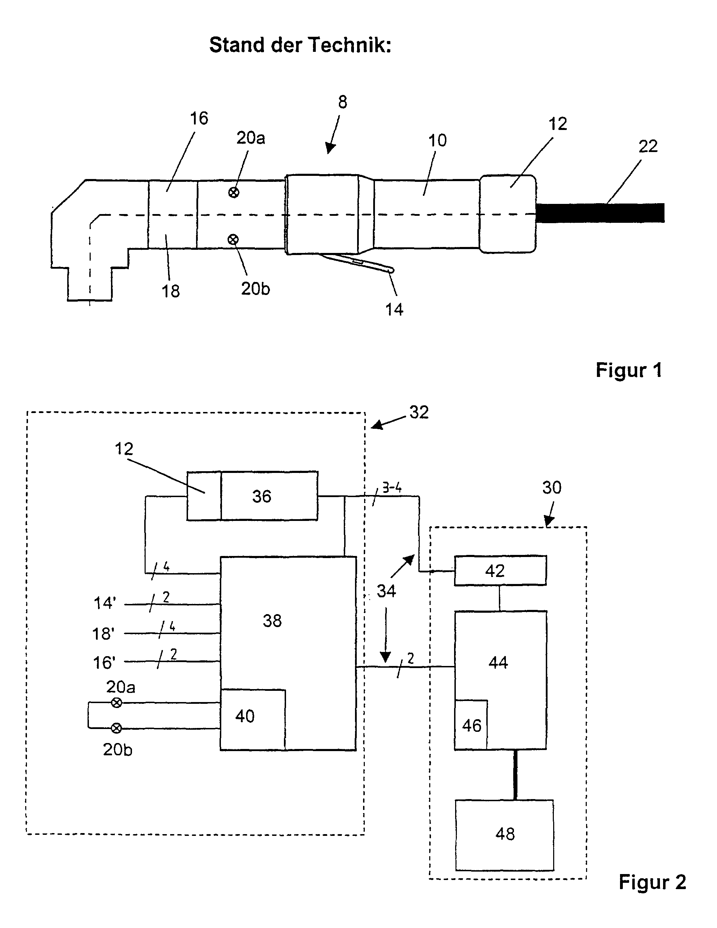

Fig. 1 zeigt eine schematische Seitenansicht eines Elektro-Handschraubers 8, wie er im Stand der Technik verwendet wird. Zum Betrieb eines solchen Bearbeitungsgerätes sind elektrische Anschlußleitungen 22 erforderlich, die das Gerät mit einer zugehörigen Steuerungs- und Versorgungseinheit verbindet. Aufgrund der vielfältigen benötigten Funktionen in einem solchen Elektro-Handschrauber werden entsprechende mehradrige und damit schwere Kabel benötigt. So weist ein herkömmlicher Handschrauber typischerweise eine folgende Kabelbelegung auf:

| Nummer | Kabel für | Anzahl der Kabeladern | verdrillt und abgeschirmt |
|---|---|---|---|
| 1 | Motorversorgung | 4 | nein |
| 2 | Motorlagegeber | 4 | ja |
| 3 | Startschalter | 2 | ja |
| 4 | IO/NIO KontroIIIeuchten | 2 | ja |
| 5 | Drehmomentsensor | 4 | ja |
| 6 | Drehwinkelsensor | 2 | ja |

Um demnach die notwendigen Signale bzw. Versorgungsspannungen zu der Motorversorgung 10, dem Motorlagegeber 12, dem Startschalter 14, den IO/NIO Kontrollleuchten 20a, 20b, dem Drehwinkelsensor 16 und dem Drehmomentsensor 18 zu übertragen, ist typischerweise ein Anschlußkabel 22 mit 18 Kabeladern notwendig. Zwangsweise führen solche aufwendigen und dicken Kabel auch zu komplexen, anfälligen und teuren Steckerverbindersystemen und ziehen einen entsprechend hohen Kabelkonfektionierungsaufwand nach sich. Da solche Kabel ständigen mechanischen Belastungen ausgesetzt sind, sind sie sehr störanfällig und müssen in regelmäßigen Abständen ausgetauscht werden.

DE 3 922 049 A1 offenbart ein tragbares kraftangetriebenes Werkzeug zum Anziehen von Schrauben oder Muttern sowie ein Antriebssystem für dieses, wobei das Werkzeug ein tragbares Gehäuse mit einem in diesem untergebrachten Elektromotor zum Antrieb einer Ausgangswelle umfaßt, mit der jeweils ein Schrauben- oder Mutterneingriffsglied aus einer Reihe von Eingriffsgliedern zur Einnahme seiner Arbeitsposition verbindbar ist.

Demgemäß ist es eine Aufgabe der Erfindung, eine Anordnung und ein Verfahren zur störungssicheren und zuverlässigen und dabei kostengünstigen Übertragung von Signalen bzw. Daten und Versorgungsleistungen zwischen einem Schraubgerät und einer zugeordneten Zentraleinheit unter Einsatz kostengünstiger Teile anzugeben, wobei die Anordnung bevorzugt auch in hohen und sehr hohen Drehzahlbereichen motorgesteuerter Schraubgeräte einsetzbar sein soll.

Erfindungsgemäß wird diese Aufgabe durch eine Schrauberanordnung gemäß Anspruch 1, ein Verfahren zur Übertragung von Daten gemäß Anspruch 16 und eine Verwendung gemäß Anspruch 14 gelöst. Bevorzugte Ausführungsformen sind Gegenstand der Unteransprüche.

Eine erfindungsgemäße Schrauberanordnung umfaßt ein Schraubgerät, eine Zentraleinheit und ein Übertragungsmittel, wobei das Schraubgerät zumindest einen Kodierer zur Erstellung von kodierten Daten aus einer Vielzahl von Daten in dem Schraubgerät und die Zentraleinheit zumindest einen Dekodierer zur Wiederherstellung (Dekodierung) der Vielzahl von Daten aus den übertragenen kodierten Daten aufweist und das Übertragungsmittel zur Übertragung der kodierten Daten von dem Schraubgerät zu der Zentraleinheit ausgelegt ist. Insbesondere können somit von dem Schraubgerät erfaßte Daten bzw. Signale durch den Kodierer, welcher in dem Schraubgerät vorgesehen ist, in kodierte Daten gewandelt werden, die nachfolgend auf eine Übertragung mittels des Übertragungsmittels in der Zentraleinheit durch den Dekodierer wieder in die ursprünglichen Daten (Vielzahl von Daten) dekodierbar sind.

Bevorzugt ist das Übertragungsmittel zu einer seriellen Übertragung der kodierten Daten ausgelegt. Jedoch ist es ebenfalls möglich, einen Teil der Daten in herkömmlicher Weise (parallel) zu übertragen, während ein anderer Teil der Daten in Form der kodierten Daten seriell übertragen wird.

Gemäß einer bevorzugten Ausführungsform umfaßt das Übertragungsmittel zumindest ein flexibles Kabel, welches das Schraubgerät mit der zugeordneten Zentraleinheit verbindet.

Bevorzugt ist das flexible Kabel ein zweiadriges Übertragungskabel, welches zusätzlich zu einem Leistungsversorgungskabel zwischen dem Schraubgerät und der Zentraleinheit bereitgestellt ist. In diesem Fall kann das Leistungsversorgungskabel ein herkömmliches Versorgungskabel (Stromkabel) sein, das keine weiteren Kabeladern zur Datenübertragung aufweisen muß. Das Übertragungskabel andererseits ist bevorzugt ein zweiadriges Kabel, das eine zusätzliche Abschirmung und/oder Verdrillung (twisted pair) aufweisen kann.

Besonders bevorzugt ist es, daß Kabel als ein zumindest zweiadriges Leistungsversorgungskabel auszulegen und das Schraubgerät mit einem Übertragungstransformator zur Übertragung der kodierten Daten über das Leistungsversorgungskabel bereitzustellen, um so auf ein zusätzliches Übertragungskabel verzichten zu können. Somit werden zur Verbindung der Zentraleinheit mit dem Schraubgerät nur stabile und störungssichere Leistungsversorgungskabel bzw. -kabeladern eingesetzt. Der Übertragungstransformator kann hierbei ein Hochfrequenztransformator sein, der die zu übertragenden kodierten Daten als Modulationssignale auf das Leistungsversorgungskabel aufmoduliert. Bevorzugt kann auch eine Leistungsversorgung des Kodierers über den Übertragungsformator von dem Leistungsversorgungskabel erfolgen. Ferner ist es ebenfalls möglich, die Leistungsversorgung des Kodierers getrennt von der Daten- bzw. Signalübertragung mittels eines zweiten Übertragungstransformators, der ebenfalls an das Leistungsversorgungskabel angeschlossen ist, vorzusehen.

Die Zentraleinheit der Schrauberanordnung kann insbesondere eine Versorgungsund/oder Steuereinheit sein, die Steuerungssignale und/oder Strom- bzw. Spannungsversorgungen für das Schraubgerät steuern bzw. regeln kann.

Gemäß einer bevorzugten Ausführungsform ist in der Zentraleinheit zumindest ein Kodierer zum Kodieren einer Vielzahl von Zentraleinheitsdaten in kodierte Zentraleinheitsdaten und in dem Schraubgerät zumindest ein Dekodierer zum Dekodieren der übertragenen kodierten Zentraleinheitsdaten in die Vielzahl der Zentraleinheitsdaten vorgesehen und das Übertragungsmittel zur Übertragung der kodierten Zentraleinheitsdaten von der Zentraleinheit zu dem Schraubgerät ausgelegt. Hierdurch ist es möglich, einen bidirektionalen kodierten Daten- bzw. Signalstrom zwischen dem Schraubgerät und der Zentraleinheit bereitzustellen. Dieser Daten- bzw. Signalstrom von der Zentraleinheit zu dem Schraubgerät kann entweder über das Übertragungskabel bzw. das Leistungsversorgungskabel oder über ein zusätzlich bereitgestelltes Übertragungskabel bzw. weitere Kabeladern erfolgen.

Gemäß einer bevorzugten Ausführungsform weist das Schraubgerät zumindest einen Motor auf, der von der Zentraleinheit steuerbar ist. Außer bei dem genannten Schraubgerät der Schrauberanordnung kann die Erfindung auch beispielsweise bei Schraubgeräten entsprechender Anordnungen Verwendung finden, deren jeweilige Motoren insbesondere bürstenlose Gleichstrommotoren sein können.

Gemäß einer besonders bevorzugten Ausführungsform umfaßt die Zentraleinheit zumindest eine Zeitprozessierungseinheit, die zur Bestimmung einer Eingangszeit eines Einganges eines Datensatzes der übertragenen kodierten Daten in der Zentraleinheit und/oder eine Wiederherstellungszeit (Dekodierungszeit) einer Wiederherstellung (Dekodierung) eines Datensatzes der Vielzahl der Daten in der Zentraleinheit und zur Berechnung einer Motorsteuerungssignalausgabezeit aus der Eingangszeit oder der Wiederhersteilungszeit unter Berücksichtigung einer vorbestimmten Prozeß- und Übertragungszeit ausgelegt ist und die Zentraleinheit zur Ausgabe von Motorsteuerungssignalen an dem Motor, die zu der Steuerungssignalausgabezeit wirksam werden, ausgelegt ist. Durch die Zeitprozessierungseinheit ist es möglich, die Zeitverzögerung, die durch die Kodierung, Übertragung und Dekodierung der Vielzahl von Daten bzw. kodierten Daten zwischen deren Detektion bzw. Erzeugung in dem Schraubgerät und der Weiterverarbeitung der Zentraleinheit auftritt, zu korrigieren bzw. bei der Steuerung des Motors zu berücksichtigen, ohne auf kostenträchtige Bauteile für Hochfrequenzanwendungen zurückgreifen zu müssen. Eine solche Prozeß- und Übertragungszeit wird sich insbesondere immer dann besonders bemerkbar machen, wenn eine zeitlich hochpräzise Steuerung bzw. Regelung des Schraubgerätes in Abhängigkeit von zuvor von demselben in die Zentraleinheit übertragenen Daten vorgesehen ist. Insbesondere ermöglicht die Zeitprozessierungseinheiten die zeitlich hochpräzise Steuerung bzw. Regelung eines Elektromotors des Schraubgerätes auch in Motordrehzahlbereichen, die aufgrund der hierbei nicht mehr vernachlässigbaren Prozeß- und Übertragungszeit keine "Echtzeitsteuerung bzw. -regelung" mehr ermöglichen, einschließlich der jeweiligen Drehwinkellagen während der Bewegung und in der vorgesehenen Endposition.

Bevorzugt werden hierbei einzelne Datensätze der kodierten Daten von dem Schraubgerät zu der Zentraleinheit nur in einem Signal- bzw. Datenänderungsfall übertragen, d. h. ein neuer Datensatz kodierter Daten wird immer nur dann von dem Kodierer zu dem Dekodierer gesendet, wenn sich der Datensatz von dem unmittelbar vorhergehenden Datensatz unterscheidet. Durch die Bestimmung der Eingangszeit des Eingangs eines Datensatzes in der Zentraleinheit durch die Zeitprozessierungseinheit und der vorbestimmten Prozeß- und Übertragungszeit ist es folglich möglich, eine Steuerungssignalausgabezeit insbesondere für den Motor zu bestimmen, bei der Steuerungssignale in dem Schraubgerät wirksam werden müssen, um zeitlich richtig "synchronisiert" zu sein. Ein solches Steuerungssignal ist beispielsweise die Spannung bzw. die Stromstärke von einer der Motorphasen der Leistungsversorgung des Elektromotors.

Bevorzugt umfaßt die Zeitprozessierungseinheit zumindest einen ersten und einen zweiten Timer, wobei der erste Timer zur Bestimmung der Eingangszeit und/oder der Wiederherstellungszeit und der zweite Timer zur Bestimmung der Motorsteuerungsausgabezeit ausgelegt ist.

Besonders bevorzugt ist der erste Timer als Aufwärtszähltimer ausgelegt, der jeweils von einem vorbestimmten Ausgangswert zu einer Eingangszeit eines vorangegangenen Datensatzes der übertragenen kodierten Daten bis zu einem Zielwert zu der Eingangszeit des (späteren) Datensatzes aufwärts zählt, wobei die Zeitprozessierungseinheit zur Übergabe des um die Prozeß- und Übertragungszeit korrigierten Zielwertes an den zweiten Timer ausgelegt ist, der zweite Timer ein Abwärtszähltimer ist und von dem korrigierten Zielwert zu dem vorbestimmten Ausgangswert abwärts zählt und die Zentraleinheit zur Ausgabe der Motorsteuersignale an den Motor zu der Motorsteuerungssignalausgabezeit ausgelegt ist, bei welcher der zweite Timer auf den vorbestimmten Ausgangswert gezählt hat.

Bevorzugt ist der vorherangegangene Datensatz einer von drei unmittelbar vorangegangenen Datensätzen oder ein vorbestimmter Mittelwert aus diesen, besonders bevorzugt der erste unmittelbar vorangegeangene Datensatz. Bevorzgut zählt der erste Timer von dem vorbestimmten Ausgangswert 0 zu der Eingangszeit des unmittelbar vorangegangenen Datensatzes der übertragenen kodierten Daten bis zu einem Zielwert, den er zur Eingangszeit des unmittelbar nachfolgenden Datensatzes erreicht, und der zweite Timer zählt von dem korrigierten Zielwert zu dem Ausgangswert 0 abwärts. Der korrigierte Zielwert ergibt sich hierbei aus dem Zielwert minus einem Wert, der der Prozeß- und Übertragungszeit entspricht. Wenn der Timer 2 den vorbestimmten Ausgangswert 0 erreicht hat, werden beispielsweise Motorsteuerungssignale zur Steuerung der Motorkommutierung ausgegeben.

Erfindungsgemäß wird eine Verwendung von zumindest einem Kodierer in einem Schraubgerät und zumindest einem Dekodierer in einer Zentraleinheit vorgeschlagen, wobei der Kodierer eine Vielzahl von Daten als kodierte Daten kodiert und der Dekodierer die übertragenen kodierten Daten in die Vielzahl von Daten dekodiert und so eine Reduktion einer Übertragungskabelanzahl eines Übertragungsmittels unter eine Datenleitungsanzahl des Schraubgerätes bzw. Anzahl der von dem Schraubgerät erfaßten unterschiedlichen Sensorsignalen bzw. Daten ermöglicht, insbesondere unter vier, bevorzugt unter drei. Hierdurch ist es möglich, die Anzahl der benötigten Kabel bzw. Kabeladern zwischen einem Schraubgerät und einer zugeordneten Zentraleinheit erheblich zu reduzieren.

Insbesondere wird die Verwendung einer erfindungsgemäßen Schrauberanordnung mit einer Zeitprozessierungseinheit für Schraubgeräte vorgeschlagen, die auch in einem hohen Drehzahlbereich größer 5000 Umdrehungen/Minute, insbesondere größer 10000 Umdrehungen/Minute arbeiten sollen. In diesen hohen Drehzahlbereichen von Schraubgeräten ist eine "Echtzeitsteuerung" von beispielsweise einem Schraubgerätmotor nur unter großen Schwierigkeiten möglich, da die entsprechenden Zeitskalen eine Steuerung bzw. Regelung im MHz-Frequenzbereich erforderlich machen. Die Verwendung einer erfindungsgemäßen Schrauberanordnung und einer Zeitprozessierungseinheit ermöglicht jedoch eine Lösung des Prozeß- bzw. Übertragungszeitproblems mit elektronischen Mitteln, die lediglich eine typische Bearbeitungsfrequenz im kHz-Bereich aufweisen müssen. Diese Lösung ist sowohl im Hinblick auf die Herstellungskosten als auch auf die Baugröße und Betriebssicherheit einer "MHz-Lösung" weit überlegen.

Erfindungsgemäß wird ferner ein Verfahren zur Übertragung von Daten zwischen einem Schraubgerät und einer Zentraleinheit mit folgenden Schritten bereitgestellt:
Kodieren einer Vielzahl von Daten in dem Schraubgerät in kodierte Daten, Übertragen der kodierten Daten zu der Zentraleinheit und
Dekodieren der übertragenen kodierten Daten in die Vielzahl der Daten in der Zentraleinheit.

Gemäß einer besonderen Ausführungsform weist das Verfahren folgende zusätzliche Schritte auf:
Kodieren einer Vielzahl von Zentraleinheitsdaten in der Zentraleinheit in kodierte Zentraleinheitsdaten,
Übertragen der kodierten Zentraleinheitsdaten zu dem Schraubgerät und
Dekodieren der übertragenen kodierten Zentraleinheitsdaten in die Vielzahl der Zentraleinheitsdaten in dem Schraubgerät.

Das Verfahren sieht insbesondere vor, daß die Zentraleinheit eine Steuerungssignalausgabezeit aus einer Eingangszeit eines Datensatzes der übertragenen kodierten Daten in der Zentraleinheit und/oder einer Wiederherstellungszeit (Dekodierungszeit) einer Wiederherstellung (Dekodierung) eines Datensatzes der Vielzahl der Daten in der Zentraleinheit unter Berücksichtigung einer vorbestimmten Prozeß- und Übertragungszeit bestimmt und Steuerungssignale an das Schraubgerät überträgt, die zu der Steuerungssignalausgabezeit wirksam werden. Die Steuerungssignale können insbesondere Versorgungsspannungen bzw. Ströme der einzelnen Motorphasen eines Motors des Schraubgerätes sein, die zu dem Zeitpunkt der Steuerungssignalausgabezeit von der Zentraleinheit ausgegeben werden.

Bevorzugt bestimmt die Zentraleinheit die Eingangszeit des Datensatzes der kodierten Daten aus einer Zeitdifferenz zwischen einem Eingang eines vorherigen Datensatzes und dem Eingang des (zeitlich späteren) Datensatzes der kodierten Daten in der Zentraleinheit.

Besonders bevorzugt ist es hierbei, daß der vorherige Datensatz ein unmittelbar vorheriger Datensatz ist. In diesem Fall ist es insbesondere möglich, daß die Steuerungsausgabezeit der Eingangszeit des Datensatzes der übertragenen kodierten Daten um eine Zeitspanne nachfolgt, welche die um die Prozeß- und Übertragungszeit verringerte Eingangszeit ist.

Ein besonderer Vorteil der Erfindung ist in der Verwendung eines Verfahrens bzw. einer Schrauberanordnung bzw. einer Steuerung von Hochpräzisionsschraubgeräten zu sehen, bei denen es auf eine hochpräzise Werkzeugwinkelpositionierung bzw. -steuerung unabhängig von der Betriebsdrehzahl eines Schraubermotors ankommt.

Die Erfindung wird nachfolgend beispielhaft mit Bezug auf die begleitenden Zeichnungen beschrieben. Es zeigen:
- Fig. 1: eine schematische Seitenansicht eines herkömmlichen Handschraubers;
- Fig. 2: ein Blockschaltdiagramm einer Ausführungsform einer erfindungsgemäßen Schrauberanordnung;
- Fig. 3: ein Blockschaltdiagramm einer weiteren Ausführungsform der erfindungsgemäßen Schrauberanordnung;
- Fig. 4: ein Blockschaltdiagramm einer weiteren Ausführungsform einer weiteren erfindungsgemäßen Schrauberanordnung;
- Fig. 5: ein Flußdiagramm, das die logische Schrittabfolge in einem Kodierer einer erfindungsgemäßen Schrauberanordnung zeigt;
- Fig. 6: ein Flußdiagramm, das die logische Schrittabfolge in einem Dekodierer einer erfindungsgemäßen Schrauberanordnung zeigt; und
- Fig. 7: ein Signal-Zeitdiagramm, das die Funktionsweise eines ersten und zweiten Timers einer Zeitprozessierungseinheit einer erfindungsgemäßen Schrauberanordnung zeigt.

In Fig. 2 ist schematisch ein wesentlicher Teil der Schaltungselektronik einer ersten Ausführungsform einer erfindungsgemäßen Schrauberanordnung als Blockschaltbild dargestellt. Die Schrauberanordnung wird nachfolgend auch allgemein als Bearbeitungsanordnung und das Schraubgerät als Bearbeitungsgerät bezeichnet. Das Bearbeitungsgerät ist ein Handschrauber 32, der einen bürstenlosen Gleichstrommotor 36 mit zugeordnetem Motorlagegeber 12 umfaßt. Der Motorlagegeber 12 ist über ein vieradriges Kabel mit dem Kodierer 38 verbunden, welcher als Sender dient. Startschaltersignale bzw. -daten 14', die von einem manuell zu bediendem Startschalter 14 (vgl. Fig. 1) erzeugt werden, werden über ein zweiadriges Kabel in den Kodierer 38 eingespeist. Der Motorlagegeber 12 weist typischerweise zumindest drei Hallsensoren auf, mit denen eine Drehwinkelorientierung einer Motorwelle des Motors zu jedem Zeitpunkt bestimmt werden kann. In ähnlicher Weise erhält der Kodierer 38 Drehmomentsensordaten bzw. -signale 18' sowie Drehwinkelsensordaten bzw. -signale 16' über vier- bzw. zweiadrige Kabel. Das Bearbeitungsgerät 32 umfaßt ferner einen Dekodierer (Empfänger) 40, über den Kontrollleuchten IO (grün) 20a und NIO (rot) 20b angesteuert werden.

Das Bearbeitungsgerät 32 ist über ein Übertragungsmittel 34 mit einer Zentraleinheit 30 verbunden. Das Übertragungsmittel 34 besteht hierbei aus einem fünfbis sechsadrigen flexiblen Kabel, welches in ein drei-vieradriges Leistungs- bzw. Motorversorgungskabel und ein zweiadriges Daten- bzw. Signalübertragungskabel aufgeteilt ist. Das Leistungsversorgungskabel und das Datenübertragungskabel sind hierbei in einer gemeinsamen Schutzarmierung bereitgestellt. Das Motorversorgungskabel ist mit einem Leistungsteil 42 in der Zentraleinheit 30 und das Signal- bzw. Datenübertragungskabel ist mit einem Dekodierer (Empfänger) 44 in der Zentraleinheit 30 elektrisch leitfähig verbunden. In der Zentraleinheit 30 ist ferner ein Kodierer (Sender) 46 untergebracht, der mit dem Dekodierer 44 in Verbindung steht. Der Kodierer 46 und der Dekodierer 44 sind über ein vieladriges Breitbandkabel mit einer Schraubersteuereinheit 48 verbunden. Die elektrischen Leistungsversorgungsleitungen zu dem Dekodierer 44, dem Kodierer 46 und der Schraubersteuereinheit 48 sind nicht dargestellt.

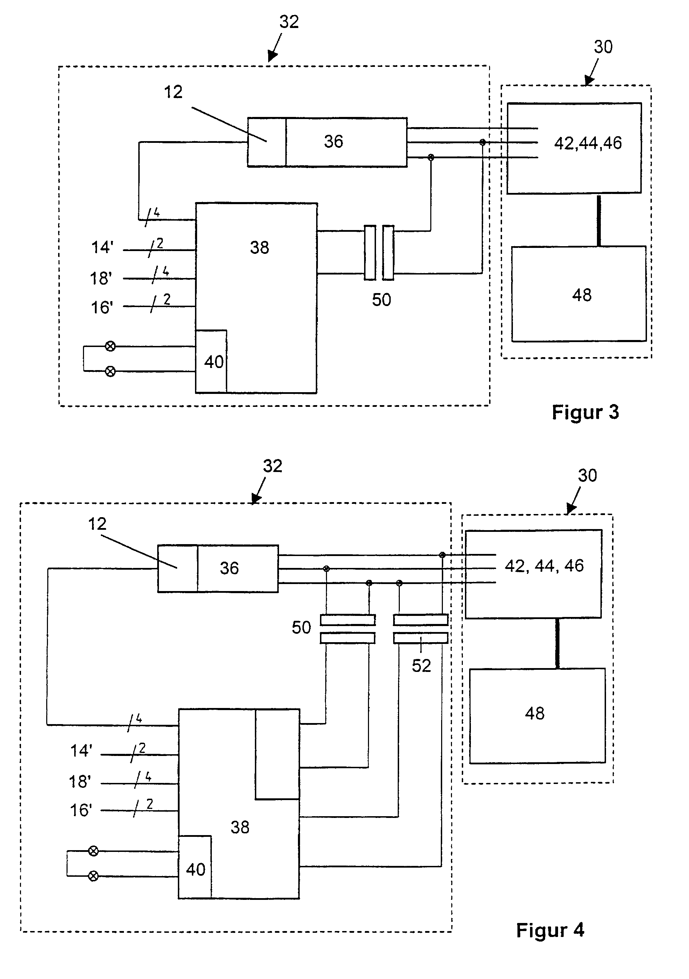

In Fig. 3 ist eine schematische Blockansicht einer zweiten Ausführungsform einer erfindungsgemäßen Bearbeitungsanordnung 32 dargestellt. Im Gegensatz zu der in Fig. 2 dargestellten Ausführungsform wird hierbei ein Übertragungstransformator 50 in dem Bearbeitungsgerät 32 verwendet, um Signale bzw. Daten sowie eine Versorgungsleistung des Kodierers 38 und Dekodierers 40 über die Leistungs- bzw. Motorleistungsversorgungskabel zu senden bzw. empfangen. Auf das zusätzliche zweiadrige Signal- bzw. Datenübertragungskabel, das in der in Fig. 2 dargestellten Ausführungsform verwendet wird, kann dadurch verzichtet werden. Der Übertragungstransformator 50 ist ein Hochfrequenztransformator, der die Daten bzw. Signale auf zwei Kabeladern des Motorversorgungskabels hochfrequent aufmoduliert. Die Gesamtzahl der für das Übertragungsmittel notwendigen Kabeladern kann somit bis auf drei Kabeladern reduziert werden. Das Motorversorgungskabel ist ein herkömmliches Standardstromkabel, welches wesentlich günstiger als ein 18-adriges Spezialanschlußkabel ist, das im Stand der Technik verwendet wird (vergleiche Fig. 1).

Fig. 4 zeigt eine dritte Ausführungsform der erfindungsgemäßen Bearbeitungsanordnung 32. Im Unterschied zu der in Fig. 3 dargestellten Ausführungsform wird hierbei die Leistungsversorgung des Kodierers 38 und des Dekodierers 40 des Bearbeitunngsgerätes 32 von einem getrennten Übertragungstransformator 52 übernommen, der zusätzlich zu dem Übertragungstransformator 50 vorgesehen ist, wodurch eine Verbesserung der Übertragungseffizienz und Sicherheit von Daten und Leistungen ermöglicht wird.

Im folgenden wird die Arbeitsweise der erfindungsgemäßen Bearbeitungsanordnung 32, hier ein Elektro-Handschrauber, erläutert. Ein Schraubvorgang mittels des Elektro-Handschraubers 32 wird durch ein Betätigen des Startschalters 14 ausgelöst. Sämtliche in dem Handschrauber 32 erfaßte Sensordaten bzw. - signale, insbesondere die des Motorlagegebers 12, des Startschalters 14, des Drehmomentsensors 18 und des Drehwinkelsensors 16 werden dem Kodierer 38 des Handschraubers 32 zugeführt. Änderen sich ein oder mehrere Signale dieser genannten Sensordaten, so sendet der Kodierer 38 die Daten als einen kodierten Datensatz über das Übertragungsmittel 34 an die Zentraleinheit 30. Dort wird der Datensatz der übertragenen kodierten Daten von dem Dekodierer 44 empfangen und nachfolgend in die ursprüngliche Vielfalt der Daten dekodiert. Zur weiteren Verarbeitung der Daten sowie zur eigentlichen Steuerung des Handschraubers 32 wird die Vielzahl der Daten von dem Dekodierer 44 über ein vieladriges Kabel nun einer Schraubersteuereinheit 48 übergeben, die zur Steuerung des Handschraubers 23 ausgelegt ist. Abhängig von den in der Zentraleinheit 30 empfangenen kodierten Daten, erfolgt eine Steuerung des Schraubermotors durch geeignete Steuerung der Motorkommutierung, auf die später noch detailiert eingegangen wird.

Zusätzlich werden von dem Kodierer 46 in der Zentraleinheit 30 Kontrollsignale an den Dekodierer 40 in dem Handschrauber 32 gesendet, um so mittels der Leuchtioden 20a, 20b dem Bediener eine Rückmeldung geben, ob der Schraubvorgang ordnungsgemäß durchgeführt wird bzw. beendet ist. In diesem Fall leuchtet die Kontroll-LED 20a (grün), im Fehlerfall leuchtet die Kontroll-LED (NIO, rot).

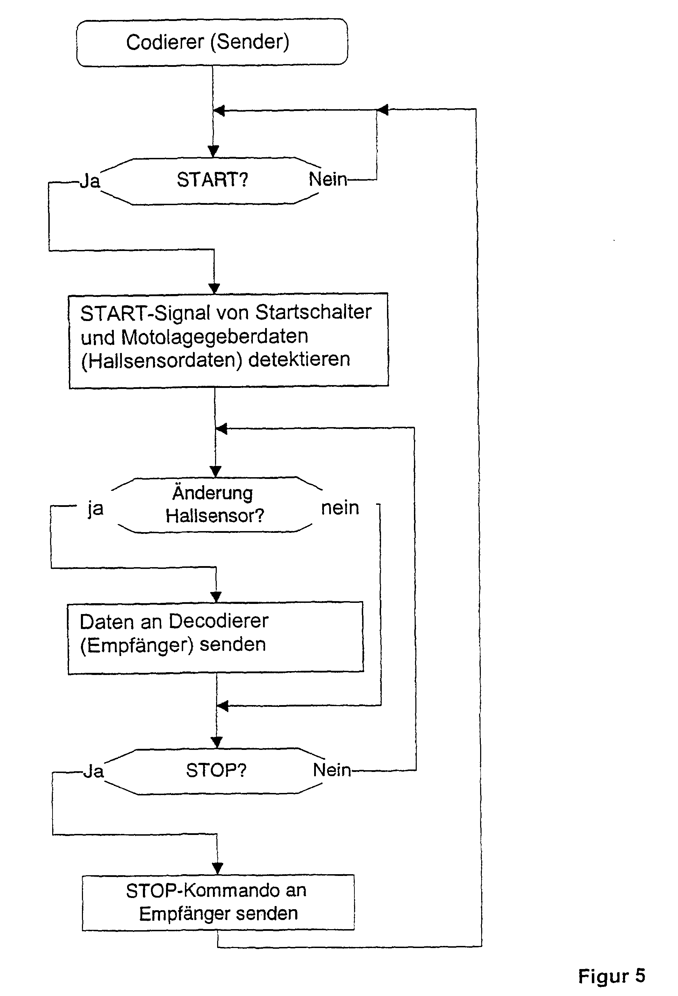

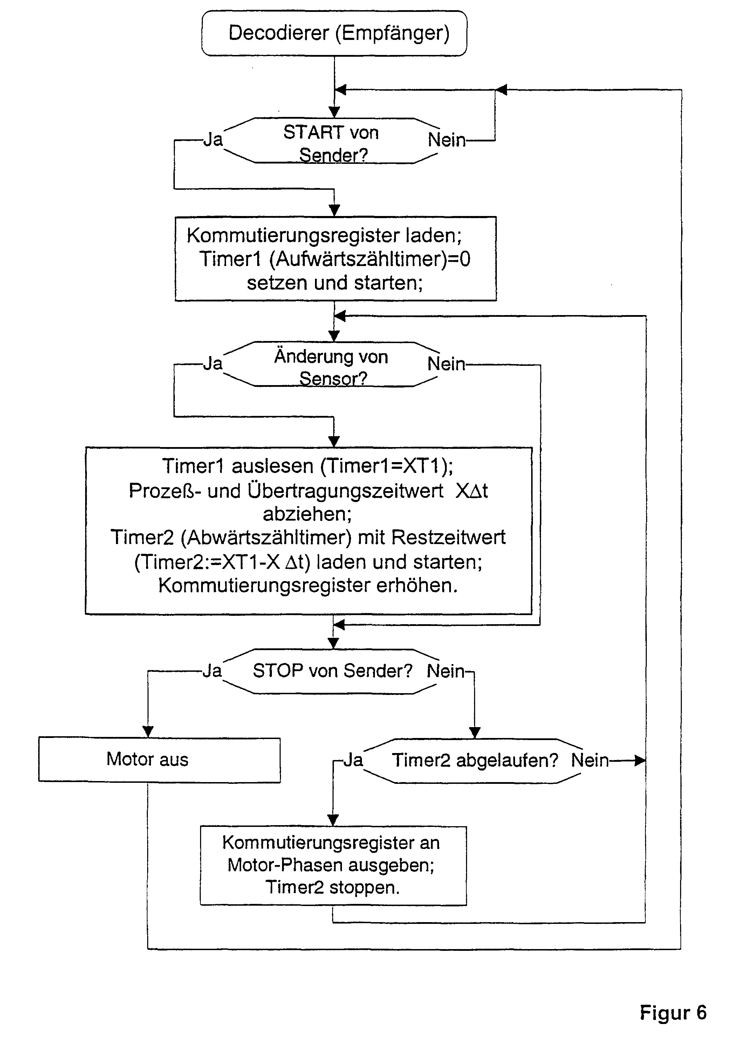

Die Betriebsweise der Bearbeitungsanordnung wird im folgenden anhand der Flußdiagramme von Fig. 5 und 6 weiter verdeutlicht werden. Zunächst soll anhand von Fig. 5 die Betriebsweise des Kodierers 38 des Handschraubers 32 beschrieben werden. Betätigt der Benutzer den Startschalter 14 des Handschraubers 32, so wird das Startschaltersignal 14' des Startschalters 14 und die Motorlagegeberdaten (Hallsensordaten) des Motorlagegebers 12 von dem Kodierer 38 ausgelesen bzw. empfangen. Ändern sich von einem Datensatz zum darauffolgenden Datensatz die Motorlagegeberdaten (Hallsensordaten), so werden die Daten in dem Kodierer 38 kodiert und über das Übertragungsmittel 34 an den Dekodierer 44 in der Zentraleinheit 30 gesendet. In dem Dekodierer 44 werden die übertragenen kodierten Daten nachfolgend dekodiert und weiterverarbeitet, was anhand von Fig. 6 genauer beschrieben werden wird. Ist der Wert des Start-Signals 14' des Startschalters 14 gleich dem Wert "STOP", so wird ein Stop-Kommando an den Dekodierer 44 in der Zentraleinheit 30 gesendet und der Schraubvorgang beendet. Hat jedoch das Start-Signal einen anderen Wert, so erfolgt ein weiteres Auslesen und Vergleichen der Sensordaten im Handschrauber 32 durch den Kodierer 38. Folglich werden von dem Kodierer 38 nur Daten an den Dekodierer 44 gesendet, wenn eine Änderung der Hallsensordaten bzw. der Motorlagegeberdaten vorliegt. Typischerweise weist ein übertragener Datensatz eine Größe von zumindest vier, typischerweise acht oder sechzehn Bit auf.

Die Betriebsweise des Dekodierers 44 der Zentraleinheit 30 soll im folgenden anhand des Flußdiagrammes von Fig. 6 näher erläutert werden. Dieses Flußdiagramm bezieht sich hierbei auf eine Ausführungsform der Bearbeitungsanordnung, die besonders für Handschrauber geeignet ist, die auch in einem hohen Drehzahlbereich über 5000 Umdrehungen/Minute eingesetzt werden sollen. Bei derartig großen Drehzahlen stellt sich das Problem, daß keine" Echtzeitsteuerung" des Motors des Handschraubers 32 mehr von der Zentraleinheit 30 erfolgen kann, da eine Prozeß- und Übertragungszeit Δt nicht mehr vernachlässigbar gegenüber den typischen Kommutierungszeiten des bürstenlosen Gleichstrommotors ist, da die Übertragung zwischen dem Kodierer 38 und dem Dekodierer 44 typischerweise mit einer Datenübertragungsgeschwindigkeit von weniger als 50 kBaud erfolgt. Um jedoch eine tatsächliche "Echtzeitsteuerung" der Motorkommutierung des Handschraubermotors 36 vornehmen zu können, wäre eine um Größenordnungen höhere Datenübertragungsrate notwendig. Eine hierfür notwendige MHz-Elektronik wäre jedoch aus Kosten-, Zuverlässigkeits- und Baugrößengründen unvorteilhaft.

Die in Fig. 6 beschriebene Ausführungsform löst dieses Problem durch einen Einsatz einer Zeitprozessierungseinheit, die eine Korrektur bzw. eine Bestimmung einer Ausgabezeit T₂ von Motorsteuerungssignalen bzw. Motorversorgungssignalen anhand einer von der Zentraleinheit 30 bestimmten Eingangszeit T₁ eines Datensatzes der übertragenen kodierten Daten vornimmt. Alternativ zu der Bestimmung der Eingangszeit T₁ eines Datensatzes der kodierten übertragenen Daten in der Zentraleinheit kann hierfür auch eine Wiederherstellungszeit (Dekodierungszeit) T_{1'} bestimmt werden. Unter der Wiederherstellungszeit T_{1'} wird dabei derjenige Zeitpunkt verstanden, bei welchem die Vielzahl der Daten von dem Dekodierer 44 aus dem Datensatz der übertragenen kodierten Daten wiederhergestellt worden ist.

Gemäß Fig. 6 wird ein Timer 1, der als Aufwärtszähltimer ausgelegt ist, auf den Wert O gesetzt und gestartet, wenn ein "START-Signal" von dem Kodierer 38 empfangen wird. Nachfolgend wird geprüft, ob die Daten des Motorlagegebers (Hallsensordaten) sich geändert haben. Ist das der Fall, so ist ein neuer Datensatz der kodierten Daten von dem Dekodierer 44 der Zentraleinheit empfangen worden. Daraufhin wird der Wert des Timer 1 ausgelesen (Timer 1 = XT₁). Dieser Wert XT₁ des Timers 1 läßt sich folglich einer Zeit T₁ zuordnen, die zwischen zwei Eingängen unmittelbar nachfolgender Datensätze von kodierten Daten in der Zentraleinheit 30 vergangen ist. Von diesem Zeitwert XT₁ wird nun zur Korrektur der Prozeß- und Übertragungszeit Δt ein Prozeß- und Übertragungszeitwert XΔt abgezogen. Dieser Wert wird einem Timer 2, der als Abwärtszähltimer ausgelegt ist, übergeben wonach dieser gestartet wird. Zusätzlich wird das Kommutierungsregister für die Motorkommutierung des Handschraubermotors 36 um einen Wert erhöht. Wird nachfolgend kein Stop-Signal von dem Kodierer 38 erhalten, so erfolgt eine Prüfung, ob der Abwärtszähltimer 2 bereits abgelaufen ist, d. h. den Wert 0 erreicht hat. Ist dies nicht der Fall, so wiederholt sich der Ablauf der genannten Schritte von der Prüfung der Änderung der Motorlagegeberdaten (Hallsensordaten) an bis schließlich entweder ein Stop-Signal empfangen wird oder, falls dies nicht der Fall ist, der Timer 2 den Wert 0 erreicht hat (Zeitpunkt T₂). Zu diesem Zeitpunkt werden die neuen Kommutierungssignale an die Motorphasen ausgegeben und der Timer 2 gestopt.

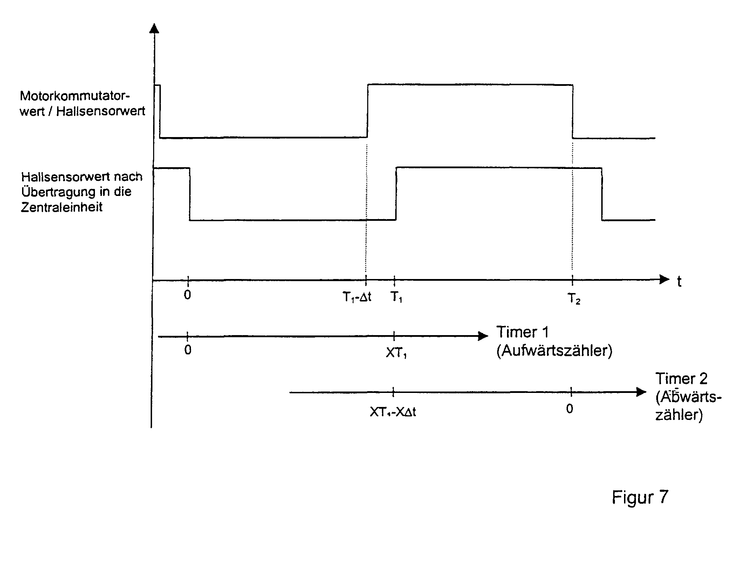

Fig. 7 zeigt in einem Signal/Spannung - Zeitdiagramm nochmals die Funktionsweise der mit zwei Timern arbeitenden Zeitprozessierungseinheit, wobei lediglich ein einzelner Durchlauf durch das in Fig. 6 dargestellte Flußdiagramm dargestellt ist. Die Motorkommutatorwerte bzw. Hallsensorwerte werden sind hierbei lediglich schematisch als Rechteckspannungen dargestellt. Zu einem Zeitpunkt t = 0, der dem Zeitpunkt des Eingangs eines Datensatzes N - 1 der kodierten übertragenen Daten in der Zentraleinheit 30 entspricht, wird der Aufwärtszähltimer 1 auf seinen Startwert Timer 1 = 0 gesetzt und gestartet. Zu dem Zeitpunkt t = T₁ empfängt der Dekodierer 44 den unmittelbar darauffolgenden Datensatz N der übertragenen kodierten Daten. Aufgrund der Prozeß- und Übertragungszeit Δt ist diesem Datensatz N jedoch eine "tatsächliche" Zeit T₁ - Δt zuzuordnen. Zu dem Zeitpunkt t = T₁ hat der Timer 1 den Wert XT1 erreicht. Um der Prozeß- und Zeitprozessierungszeit Δt Rechnung zu tragen, wird der Abwärtszähltimer 2 mit dem Restzeitwert XT₁ - XΔt geladen und gestartet. Somit erreicht der Timer 2 den Ausgangswert O genau zur Zeit T₂, zu der eine Ausgabe des erhöhten Motorkommutierungsregisters an die Motorphasen notwendig ist. Somit erfolgt trotz der nicht zu vernachlässigenden Prozeß- und Übertragungszeit Δt eine zeitliche hochpräzise Steuerung der Motorkommutierung, wie sie für eine drehwinkelgenaue Steuerung von Bearbeitungsgeräten notwendig ist.

### Bezugszeichenliste

- 8: Handschrauber
- 10: Motorversorgung
- 12: Motorlagegeber
- 14: Startschalter
- 16: Drehwinkelsensor
- 18: Drehmomentsensor
- 20a: IO-Kontrolleuchte
- 20b: NIO-Kontrolleuchte
- 22: Anschlußkabel
- 30: Zentraleinheit
- 32: Bearbeitungsgerät
- 34: Übertragungsmittel
- 36: Motor
- 38: Kodierer (Sender) in dem Bearbeitungsgerät
- 40: Dekodierer (Empfänger) in dem Bearbeitungsgerät
- 42: Leistungsteil
- 44: Dekodierer (Empfänger) in der Zentraleinheit
- 46: Kodierer (Sender) in der Zentraleinheit
- 48: Schraubersteuereinheit
- 50: Übertragungstransformator
- 52: zweiter Übertragungstransformator

## Patentansprüche

1. Schrauberanordnung mit einem Schraubgerät (32), einer Zentraleinheit (30) und einem Übertragungsmittel (34), wobei die Zentraleinheit (30) zumindest einen Dekodierer (44) zur Wiederherstellung einer Vielzahl von Daten aus übertragenen kodierten Daten aufweist und das Übertragungsmittel (34) zur Übertragung der kodierten Daten von dem Schraubgerät (32) zu der Zentraleinheit (30) ausgelegt ist,
**dadurch gekennzeichnet, daß**
das Schraubgerät (32) zumindest einen Kodierer (38) zur Erstellung der kodierten Daten aus der Vielzahl von Daten in dem Schraubgerät (32) aufweist.

2. Schrauberanordnung nach Anspruch 1, wobei das Übertragungsmittel (34) zu einer seriellen Übertragung der kodierten Daten ausgelegt ist.

3. Schrauberanordnung nach Anspruch 1 oder 2, wobei das Übertragungsmittel (34) zumindest ein flexibles Kabel umfaßt, welches das Schraubgerät (32) mit der Zentraleinheit (30) verbindet.

4. Schrauberanordnung nach Anspruch 3, wobei das Kabel ein zweiadriges Übertragungskabel ist, das zusätzlich zu einem Leistungsversorgungskabel zwischen dem Schraubgerät (32) und der Zentraleinheit (30) bereitgestellt ist.

5. Schrauberanordnung nach Anspruch 3, wobei das Kabel ein zumindest zweiadriges Leistungsversorgungskabel ist und das Schraubgerät (32) mit einem Übertragungstransformator (50, 52) zur Übertragung der kodierten Daten über das Leistungsversorgungskabel bereitgestellt ist.

6. Schrauberanordnung nach einem der vorangegangenen Ansprüche, wobei die Zentraleinheit (30) eine Versorungs- und/oder Steuereinheit ist.

7. Schrauberanordnung nach einem der vorherigen Ansprüche, wobei in der Zentraleinheit (30) zumindest ein Kodierer (46) zum Kodieren einer Vielzahl von Zentraleinheitsdaten in kodierte Zentraleinheitsdaten und in dem Schraubgerät (32) zumindest ein Dekodierer (40) zum Dekodieren der übertragenen kodierten Zentraleinheitsdaten in die Vielzahl der Zentraleinheitsdaten vorgesehen ist und das Übertragungsmittel (34) zur Übertragung der kodierten Zentraleinheitsdaten von der Zentraleinheit (30) zu dem Schraubgerät (32) ausgelegt ist.

8. Schrauberanordnung nach einem der vorangegangenen Ansprüche, wobei das Schraubgerät (32) einen Motor (36) aufweist, der von der Zentraleinheit (30) steuerbar ist.

9. Schrauberanordnung nach Anspruch 8, wobei der Motor (36) ein bürstenloser Gleichstrommotor ist.

10. Schrauberanordnung nach Anspruch 8 oder 9, wobei die Zentraleinheit (30) zumindest eine Zeitprozessierungseinheit umfaßt, die zur Bestimmung einer Eingangszeit (T₁) eines Eingangs eines Datensatzes (N) der übertragenen kodierten Daten in der Zentraleinheit (30) und/oder einer Wiederherstellungszeit (T₁') einer Wiederherstellung Dekodierung eines Datensatzes (N') der Vielzahl der Daten in der Zentraleinheit (30) und zur Berechnung einer Motorsteuerungssignalausgabezeit (T₂) aus der Eingangszeit (T₁) oder der Wiederherstellungszeit (T₁') unter Berücksichtigung einer vorbestimmten Prozeß- und Übertragungszeit (Δt, Δt') ausgelegt ist und die Zentraleinheit (30) zur Ausgabe von Motorsteuerungssignalen an den Motor (36), die zu der Motorsteuerungssignalausgabezeit (T₂) wirksam werden, ausgelegt ist.

11. Schrauberanordnung nach Anspruch 10, wobei die Zeitprozessierungseinheit zumindest einen ersten und einen zweiten Timer umfaßt, wobei der erste Timer zur Bestimmung der Eingangszeit (T₁) und/oder der Wiederherstellungszeit (T₁') und der zweite Timer zur Bestimmung der Motorsteuerungsausgabezeit (T₂) ausgelegt ist.

12. Schrauberanordnung nach Anspruch 11, wobei der erste Timer als Aufwärtszähltimer ausgelegt ist, der jeweils von einem vorbestimmten Ausgangswert, Timer1 = 0, zu einer Eingangszeit eines vorherigen Datensatzes (N-a) der übertragenen kodierten Daten bis zu einem Zielwert, Timer1 = XT, zu der Eingangszeit (T₁) des Eingang des Datensatzes (N) aufwärts zählt,
die Zeitprozessierungseinheit zur Übergabe des um die Prozeß- und Übertragungszeit (Δt) korrigierten Zielwerts (XT₁-XΔt) an den zweiten Timer ausgelegt ist,
der zweite Timer als Abwärtszähltimer ausgelegt ist und von dem korrigierten Zielwert, Timer2 = XT₁-XΔt, zu dem vorbestimmten Ausgangswert (0) abwärts zählt und
die Zentraleinheit (30) zur Ausgabe der Motorsteuersignale an den Motor zu der Motorsteuerungssignalausgabezeit (T₂) ausgelegt ist, bei welcher der zweite Timer auf den vorbestimmten Ausgangswert, Timer2 = 0, gezählt hat.

13. Schrauberanordnung nach Anspruch 12, wobei der vorherige Datensatz (N-a) einer von drei unmittelbar vorhergehenden Datensätzen (N-3; N-2; N-1) ist.

14. Verwendung von zumindest einem Kodierer (38) in einem Schraubgerät (32) und zumindest einem Dekodierer (44) in einer Zentraleinheit (30), wobei der Dekodierer (44) übertragene kodierte Daten in eine Vielzahl von Daten dekodiert und so eine Reduktion einer Übertragungskabelanzahl eines Übertragungsmittels unter eine Datenleitungsanzahl des Schraubgeräts (32), insbesondere unter 4, bevorzugt unter 3, ermöglicht,
**dadurch gekennzeichnet, daß**
der Kodierer (38) eine Vielzahl von Daten als die kodierten Daten kodiert.

15. Verwendung einer Schrauberanordung nach einem der Anprüche 10-13 für ein Schraubgerät (32), das auch in einem Drehzahlbereich größer 5000 Umdrehungen pro Minute, insbesondere größer 10000 Umdrehungen pro Minute arbeiten soll.

16. Verfahren zur Übertragung von Daten zwischen einem Schraubgerät (32) und einer Zentraleinheit (30) mit folgenden Schritten:
Kodieren einer Vielzahl von Daten in dem Schraubgerät (32) in kodierte Daten,
Übertragen der kodierten Daten zu der Zentraleinheit (30) und
Dekodieren der übertragenen kodierten Daten in die Vielzahl der Daten in der Zentraleinheit (30).

17. Verfahren nach Anspruch 16 mit folgenden zusätzlichen Schitten:
Kodieren einer Vielzahl von Zentraleinheitsdaten in der Zentraleinheit (30) in kodierte Zentraleinheitsdaten,
Übertragen der kodierten Zentraleinheitsdaten zu dem Schraubgerät (32) und
Dekodieren der übertragenen kodierten Zentraleinheitsdaten in die Vielzahl der Zentraleinheitsdaten in dem Schraubgerät (32).

18. Verfahren nach Anspruch 16, wobei die Zentraleinheit (30) eine Steuerungssignalausgabezeit (T₂) aus einer Eingangszeit (T₁) eines Datensatzes (N) der übertragenen kodierten Daten in der Zentraleinheit (30) und/oder einer Wiederherstellungszeit (T₁') einer Wiederherstellung, Dekodierung eines Datensatzes (N') der Vielzahl der Daten in der Zentraleinheit (30) unter Berücksichtigung einer vorbestimmten Prozeß- und Übertragungszeit (Δt, Δt') bestimmt und Steuerungssignale an das Schraubgerät (32) überträgt, die zu der Steuerungssignalausgabezeit (T₂) wirksam werden.

19. Verfahren nach Anspruch 18, wobei die Zentraleinheit (30) die Eingangszeit (T₁) des Datensatzes (N) der kodierten Daten aus einer Zeitdifferenz zwischen einem Eingang zumindest eines vorherigen Datensatzes (N-a) und dem Eingang des Datensatzes (N) der kodierten Daten bestimmt.

20. Verfahren nach Anspruch 19, wobei der vorherige Datensatz ein unmittelbar vorheriger Datensatz (N-1) ist.

21. Verfahren nach Anspruch 20, wobei die Steuerungsausgabezeit (T₂) der Eingangszeit (T₁) des Datensatzes der übertragenen kodierten Daten (N) um eine Zeitspanne nachfolgt, welche die um die Prozeß- und Übertragungszeit (Δt) veringerte Eingangszeit (T₁) ist.

22. Verwendung eines Verfahrens nach einem der Ansprüche 18-21 in einer Steuerung von Hochpräzissionsschraubgeräten (32), bei denen eine hochpräzise Werkzeugwinkelsteuerung unabhängig von der Betriebdrehzahl, insbesondere von mehr als 5000 Umdrehungen pro Minute und insbesondere mehr als 10000 Umdrehungen pro Minute notwendig ist.

## Claims

1. Screwdriver arrangement having a screwdriving appliance (32), a central unit (30) and a transmission means (34), with the central unit (30) having at least one decoder (44) for reproducing a large number of data items from transmitted coded data, and the transmission means (34) being designed for transmitting the coded data from the screwdriving appliance (32) to the central unit (30),
**characterized in that**
the screwdriving appliance (32) has at least one coder (38) for producing the coded data from the large number of data items in the screwdriving appliance (32).

2. Screwdriver arrangement according to Claim 1, with the transmission means (34) being designed for serial transmission of the coded data.

3. Screwdriver arrangement according to Claim 1 or 2, with the transmission means (34) comprising at least one flexible cable, which connects the screwdriving appliance (32) to the central unit (30).

4. Screwdriver arrangement according to Claim 3, with the cable being a two-core transmission cable, which is provided in addition to a power supply cable between the screwdriving appliance (32) and the central unit (30).

5. Screwdriver arrangement according to Claim 3, with the cable being a power supply cable having at least two cores, and the screwdriving appliance (32) being provided with a transmission transformer (50, 52) for transmitting the coded data via the power supply cable.

6. Screwdriver arrangement according to one of the preceding claims, with the central unit (30) being a supply and/or control unit.

7. Screwdriver arrangement according to one of the preceding claims, with at least one coder (46) being provided in the central unit (30), for coding a large number of central unit data items into coded central unit data items, and at least one decoder (40) being provided in the screwdriving appliance (32), for decoding the transmitted coded central unit data items into the large number of central unit data items, and the transmission means (34) being designed for transmitting the coded central unit data from the central unit (30) to the screwdriving appliance (32).

8. Screwdriver arrangement according to one of the preceding claims, with the screwdriving appliance (32) having a motor (36) which can be controlled by the central unit (30).

9. Screwdriver arrangement according to Claim 8, with the motor (36) being a brushless DC motor.

10. Screwdriver arrangement according to Claim 8 or 9, with the central unit (30) having at least one time processing unit which is designed for determining an input time (T_{1'}) of an input of a data record (N) of the transmitted coded data in the central unit (30), and/or a reproduction time (T_{1'}) of reproduction/decoding of a data record (N') from the large number of data items in the central unit (30), and for calculating a motor control signal output time (T₂) from the input time (T₁) or from the reproduction time (T_{1'}), taking into account a predetermined process and transmission time (Δt, Δt'), and the central unit (30) being designed for outputting motor control signals to the motor (36), which become effective at the motor control signal output time (T₂).

11. Screwdriver arrangement according to Claim 10, **characterized in that** the time processing unit has at least one first timer and at least one second timer, with the first timer being designed for determining the input time (T₁) and/or the reproduction time (T₁'), and the second timer being designed for determining the motor control output time (T₂).

12. Screwdriver arrangement according to Claim 11, with the first timer being designed as a step-up counting timer which in each case counts upwards from a predetermined initial value, Timer 1 = 0, at an input time of a previous data record (N-a) of the transmitted coded data, to a target value, Timer 1 = XT, at the input time (T₁) of the input of the data record (N),
with the time processing unit being designed for passing the target value (XT₁-XΔt), corrected by the process and transmission time (Δt) to the second timer,
with the second timer being designed as a step-down counting timer, and counting downwards from the corrected target value, Timer 2 = XT₁-XΔt, to the predetermined initial value (0), and
with the central unit (30) being designed for outputting the motor control signals to the motor at the motor control signal output time (T₂), at which the second timer has counted to the predetermined initial value, Timer 2 = 0.

13. Screwdriver arrangement according to Claim 12, with the previous data record (N-a) being one of three immediately preceding data records (N-3; N-2; N-1).

14. Use of at least one coder (38) in a screwdriving appliance (32) and of at least one decoder (44) in a central unit (30), with the decoder (44) decoding transmitted coded data into a large number of data items, and thus allowing the number of transmission cables for a transmission means to be reduced below the number of data lines for the screwdriving appliance (32), in particular below 4, and preferably below 3,
**characterized in that**
the coder (38) codes a large number data items as the coder data.

15. Use of a screwdriver arrangement according to one of Claims 10-13 for a screwdriving appliance (32) which is also intended to operate in a rotation speed range of more than 5000 revolutions per minute, in particular of more than 10000 revolutions per minute.

16. Method for transmitting data between a screwdriving appliance (32) and a central unit (30), having the following steps:
coding of a large number of data items in the screwdriving appliance (32) into coded data,
transmission of the coded data to the central unit (30), and
decoding of the transmitted coded data into the large number of data items in the central unit (30).

17. Method according to Claim 16, having the following additional steps:
coding of a large number of central unit data items in the central unit (30) into coded central unit data,
transmission of the coded central unit data to the screwdriving appliance (32), and
decoding of the transmitted coded central unit into a large number of central unit data items in the screwdriving appliance (32).

18. Method according to Claim 16, with the central unit (30) determining a control signal output time (T₂) from an input time of (T₁) of a data record (N) of the transmitted coded data in the central unit (30), and/or determining a reproduction time (T₁') of reproduction, decoding of a data record (N') of the large number of data items in the central unit (30), taking into account a predetermined process and transmission time (Δt, Δt'), and transmitting the control signals to the screwdriving appliance (32), which become effective at the control signal output time (T₂).

19. Method according to Claim 18, with the central unit (30) determining the input time (T₁) of the data record (N) of the coded data from a time difference between an input of at least one previous data record (N-a) and the input of the data record (N) of the coded data.

20. Method according to Claim 19, with the previous data record being an immediately preceding data record (N-1).

21. Method according to Claim 20, with the control output time (T₂) following the input time (T₁) of the data record of the transmitted coded data (N) following a time interval which is the input time (T₁) reduced by the process and transmission time (Δt).

22. Use of a method according to one of Claims 18-21 in a control system for high-precision screwdriving appliances (32), in which high-precision tool angle control is required independently of the operating rotation speed, in particular of more than 5000 revolutions per minute and in particular of more than 10000 revolutions per minute.

## Revendications

1. Dispositif formant visseuse comprenant un appareil de vissage (32), une unité centrale (30) et un moyen de transmission (34), l'unité centrale (30) comportant au moins un décodeur (44) servant à la reconstitution d'une pluralité de données à partir de données codées transmises et le moyen de transmission (34) étant conçu pour transmettre les données codées depuis l'appareil de vissage (32) jusqu'à l'unité centrale (30),
**caractérisé en ce que** l'appareil de vissage (32) comporte au moins un codeur (38) destiné à produire des données codées à partir de la pluralité de données dans l'appareil de vissage (32).

2. Dispositif formant visseuse selon la revendication 1, dans lequel le moyen de transmission (34) est conçu pour transmettre en série les données codées.

3. Dispositif formant visseuse selon la revendication 1 ou 2, dans lequel le moyen de transmission (34) comprend au moins un câble flexible qui relie l'appareil de vissage (32) à l'unité centrale (30).

4. Dispositif formant visseuse selon la revendication 3, dans lequel le câble est un câble de transmission à deux conducteurs qui est disposé entre l'appareil de vissage (32) et l'unité centrale (30) en plus d'un câble d'alimentation en énergie.

5. Dispositif formant visseuse selon la revendication 3, dans lequel le câble est un câble d'alimentation de puissance à deux conducteurs au moins et l'appareil de vissage (32) dispose d'un transformateur de transmission (50, 52) servant à transmettre les données codées par l'intermédiaire du câble d'alimentation de puissance.

6. Dispositif formant visseuse selon l'une des revendications précédentes, dans lequel l'unité centrale (30) est une unité d'alimentation et/ou de commande.

7. Dispositif formant visseuse selon l'une des revendications précédentes, dans lequel est prévu, dans l'unité centrale (30), au moins un codeur (46) servant à coder une pluralité de données d'unité centrale en données d'unité centrale codées et, dans l'appareil de vissage (32), au moins un décodeur (40) servant à décoder en la pluralité de données d'unité centrale les données d'unité centrale codées transmises, et le moyen de transmission (34) est conçu pour transmettre les données d'unité centrale codées depuis l'unité centrale (30) jusqu'à l'appareil de vissage (32).

8. Dispositif formant visseuse selon l'une des revendications précédentes, dans lequel l'appareil de vissage (32) comporte un moteur (36) pouvant être commandé par l'unité centrale (30).

9. Dispositif formant visseuse selon la revendication 8, dans lequel le moteur (36) est un moteur à courant continu sans balais.

10. Dispositif formant visseuse selon la revendication 8 ou 9, dans lequel l'unité centrale (30) comprend au moins une unité de traitement du temps qui est conçue pour déterminer le moment d'entrée (T₁) d'un ensemble (N) des données codées transmises dans l'unité centrale (30) et/ou un temps de reconstitution (T₁') d'une reconstitution/décodage d'un ensemble (N') de la pluralité de données dans l'unité centrale (30), ainsi que pour calculer un moment (T₂) de délivrance de signal de commande de moteur à partir du moment d'entrée (T₁) ou du temps de reconstitution (T₁') en prenant en compte un temps prédéterminé de traitement et de transmission (Δt, Δt'), et l'unité centrale (30) est conçue pour délivrer au moteur (36) des signaux de commande de moteur qui deviennent efficaces au moment de délivrance de signal de commande de moteur (T₂).

11. Dispositif formant visseuse selon la revendication 10, dans lequel l'unité de traitement du temps comprend au moins un premier et un deuxième rythmeur, le premier rythmeur étant conçu pour déterminer le moment d'entrée (T₁) et/ou le temps de reconstitution (T₁') et le deuxième rythmeur pour déterminer le moment de délivrance de commande de moteur (T₂).

12. Dispositif formant visseuse selon la revendication 11, dans lequel
le premier rythmeur est conçu en tant que rythmeur compteur croissant qui compte toujours de manière croissante à partir d'une valeur initiale prédéterminée, rythmeur 1 = 0, au moment d'entrée d'un ensemble antérieur (N - a) des données codées transmises, jusqu'à une valeur objectif, rythmeur 1 = XT₁, au moment d'entrée (T₁) de l'entrée de l'ensemble (N),
l'unité de traitement du temps est conçue pour transmettre la valeur objectif (XT₁ - XΔt) corrigée du temps de traitement et de transmission (Δt) au deuxième rythmeur,
le deuxième rythmeur est conçu en tant que rythmeur compteur décroissant et compte de manière décroissante depuis la valeur objectif corrigée, rythmeur 2 = XT₁ - XΔt, jusqu'à la valeur initiale prédéterminée (0), et
l'unité centrale (30) est conçue pour délivrer les signaux de commande au moteur au moment de délivrance de signal de commande de moteur (T₂) où le deuxième rythmeur a compté la valeur initiale prédéterminée, rythmeur 2 = 0.

13. Dispositif formant visseuse selon la revendication 12, dans lequel l'ensemble de données antérieur (N - a) est l'un des trois ensembles de données immédiatement précédents (N - 3 ; N - 2 ; N - 1).

14. Utilisation d'au moins un codeur (38) dans un appareil de vissage (32) et d'au moins un décodeur (44) dans une unité centrale (30), le décodeur (44) décodant des données codées transmises en une pluralité de données et permettant ainsi de réduire un nombre de lignes de transmission d'un moyen de transmission au-dessous d'un nombre de lignes de données de l'appareil de vissage (32), notamment au-dessous de 4, de préférence au-dessous de 3,
**caractérisée en ce que** le codeur (38) code une pluralité de données pour en faire les données codées.

15. Utilisation d'un dispositif formant visseuse selon l'une des revendications 10 à 13, pour un appareil de vissage (32) qui doit également fonctionner dans une plage de vitesses supérieures à 5000 tours par minute, notamment à plus de 10 000 tours par minute.

16. Procédé de transmission de données entre un appareil de vissage (32) et une unité centrale (30), comportant les étapes suivantes :
codage, en données codées, d'une pluralité de données dans l'appareil de vissage (32),
transmission des données codées à l'unité centrale (30), et
décodage des données codées transmises en la pluralité de données dans l'unité centrale (30).

17. Procédé selon la revendication 16, comportant les étapes supplémentaires suivantes :
codage, en données d'unité centrale codées, d'une pluralité de données d'unité centrale dans l'unité centrale (30),
transmission des données d'unité centrale codées à l'appareil de vissage (32), et
décodage des données d'unité centrale codées transmises en la pluralité de données d'unité centrale dans l'appareil de vissage (32).

18. Procédé selon la revendication 16, dans lequel l'unité centrale (30) détermine un moment (T₂) de délivrance de signal de commande à partir du moment d'entrée (T₁) d'un ensemble (N) des données codées transmises dans l'unité centrale (30) et/ou d'un temps de reconstitution (T₁') d'une reconstitution/décodage d'un ensemble (N') de la pluralité de données dans l'unité centrale (30) en prenant en compte un temps de traitement et de transmission prédéterminé (Δt, Δt') et transmet à l'appareil de vissage (32) des signaux de commande qui deviennent efficaces au moment (T₂) de délivrance de signal de commande.

19. Procédé selon la revendication 18, dans lequel l'unité centrale (30) détermine le moment d'entrée (T₁) de l'ensemble de données (N) des données codées à partir d'une différence de temps entre l'entrée d'au moins un ensemble de données antérieur (N - a) et l'entrée de l'ensemble de données (N) des données codées.

20. Procédé selon la revendication 19, dans lequel l'ensemble antérieur est un ensemble immédiatement antérieur (N - 1).

21. Procédé selon la revendication 20, dans lequel le moment de délivrance de commande (T₂) suit le moment d'entrée (T₁) de l'ensemble des données codées transmises (N) d'un laps de temps qui est le moment d'entrée (T₁) diminué du temps de traitement et de transmission (Δt).

22. Mise en oeuvre d'un procédé selon l'une des revendications 18 à 21 dans une commande d'appareils de vissage de haute précision (32) dans lesquels il est nécessaire d'avoir une commande angulaire d'outil extrêmement précise indépendamment de la vitesse de rotation, notamment de plus de 5000 tours par minute et notamment supérieure à 10 000 tours par minute.
